# EUROPÄISCHE PATENTANMELDUNG

(11) **EP 4 691 657 A1**
(43) Veröffentlichungstag der Anmeldung: **11.02.2026**
(21) Anmeldenummer: 24192785.4
(22) Anmeldetag: 05.08.2024
(51) Int. Cl.: B08B 9/032, B22F 10/68, B29C 64/35, F04B 49/22, B08B 5/02

(54) **BAUEINHEIT ZUM REINIGEN VON KAVITÄTEN ODER KANÄLEN IN ADDITIV HERGESTELLTEN OBJEKTEN UND VERFAHREN ZUR DRUCKGASREINIGUNG VON KAVITÄTEN ODER KANÄLEN SOLCHER OBJEKTE**

(71) Anmelder: Solukon Ingenieure GbR, 86165 Augsburg (DE)
(72) Erfinder: HARTMANN, Andreas, 86391 Stadtbergen (DE)
(74) Vertreter: Wiedemann, Markus

(57) **Zusammenfassung**

Die Erfindung betrifft eine Reinigungs-Baueinheit (1), eingerichtet und ausgebildet zum Druckgasreinigen von Kavitäten oder Kanälen (3) von in einem additiven Verfahren aus pulverförmigem Aufbaumaterial hergestellten Objekten (2) von unverfestigt gebliebenem Aufbaumaterial durch eine Druckgasströmung, wenigstens umfassend: Einen Druckgastank (7), eingerichtet und ausgebildet zum Speichern von unter Druck gesetztem Druckgas, und einen Druckgasversorgungsanschluss (9), eingerichtet und ausgebildet um insbesondere lösbar an eine Druckgasquelle (14) angeschlossen zu werden, um den Druckgastank mit Druckgas aus der Druckgasquelle (14) zu versorgen, einen Druckgasauslass (10), eingerichtet und ausgebildet, um das Druckgas aus dem Druckgastank (7) als Druckgasströmung direkt in die Kavität oder den Kanal (3) des Objekts (2) zu leiten oder einzubringen, oder in einen Anschluss (22) des Objekts (2) einzuleiten, welcher mit der Kavität oder dem Kanal (3) des Objekts (2) strömungsleitend verbunden ist, wenigstens ein zwischen dem Druckgastank (7) und dem Druckgasauslass (10) angeordnetes Ventil (8), eingerichtet und ausgebildet, um die Druckgasströmung zu steuern, wobei das Ventil (8) wenigstens eine, eine maximale Druckgasströmung gewährende Öffnungsstellung und eine, einen Durchfluss an Druckgas verhindernde Schließstellung aufweist.

## Beschreibung

Die Erfindung betrifft eine Reinigungs-Baueinheit, eingerichtet und ausgebildet zum Druckgasreinigen von Kavitäten oder Kanälen von in einem additiven Verfahren aus pulverförmigem Aufbaumaterial hergestellten Objekten von unverfestigt gebliebenem Aufbaumaterial durch eine Druckgasströmung gemäß Anspruch 1, ein Reinigungs-Set gemäß Anspruch 10, eine Reinigungsvorrichtung nach Anspruch 11 und ein Reinigungsverfahren zur Druckgasreinigung von Kavitäten oder Kanälen von in einem additiven Verfahren aus pulverförmigem Aufbaumaterial hergestellten Objekten von unverfestigt gebliebenem Aufbaumaterial gemäß Anspruch 13.

Im 3D-Druck oder durch additive Fertigungsverfahren hergestellte Objekte können Vertiefungen, Ausnehmungen, Öffnungen oder auch Sacklöcher (Kavitäten) und die Objekte durchdringende Kanäle aufweisen, welche mit unverfestigt gebliebenem pulverförmigen Aufbaumaterial gefüllt sind, das dann an den Innenwänden der Kanäle, Ausnehmungen oder Sacklöcher anhaftet. Dann ist ein unspezifisches Anströmen des Objekts mit einem Fluid oft wirkungslos, da diese Anströmung lediglich oberflächlich wirkt.

DE 10 2022 004 176 A1 beschreibt eine an einem mobilen Arm eines Roboters geführte Fluid-Einführungseinrichtung in Form einer Düse, welche mit Hilfe des mobilen Arms in Mündungen von Kavitäten und Kanälen von additiv hergestellten Objekten eingeführt wird, um mittels durch die Düse austretender Druckluft die Kavität oder den Kanal von unverfestigt verbliebenem Aufbaumaterial zu reinigen. Die Düse ist mit einem von dem mobilen Arm ebenfalls geführten Schlauch verbunden, der an eine Druckgasquelle angeschlossen ist. Da sowohl die Düse wie auch der Schlauch an dem mobilen Arm befestigt werden müssen, wie auch der Schlauch an der Druckgasquelle entsteht eine relativ aufwändige Montage.

Die Aufgabe der Erfindung besteht darin, eine vereinfachte Druckgasreinigung zur Verfügung zu stellen.

Diese Aufgabe wird durch die Merkmale der Patentansprüche 1, 10, 11 und 13 gelöst.

### Offenbarung der Erfindung

Das Herstellen des Objekts, wie beispielsweise eines Bauteils oder Modells erfolgt in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher Strahlung zu verschmelzen oder zu versintern.

Die Reinigung des Objekts von losem, nicht verfestigtem pulverförmigem Aufbaumaterial in der Reinigungsvorrichtung kann das komplette Auspacken des Objekts und der Bauplattform aus dem Pulverkuchen losen Pulvers beinhalten und/oder ein Abreinigen von Resten von losem Pulver von dem Objekt und der Bauplattform, welches nach dem Auspacken noch an dem Objekt und an der Bauplattform anhaftet. Insbesondere sollte ein Entfernen losen Pulvers aus wenigstens einer Öffnung, wenigstens einer Ausnehmung des Objekts und/oder aus wenigstens einem das Objekt durchdringenden Kanal des Objekts von der Reinigung des Objekts umfasst sein.

Die Kavität des Objekts kann insbesondere eine Öffnung oder Bohrung sein, die wie eine Sacklochöffnung oder Sacklochbohrung ausgestaltet ist und dann das Objekt nicht durchdringt. Ein das Objekt durchdringender Durchgangskanal hingegen geht durch wenigstens einen Teil des Objekts hindurch und weist, abhängig davon ob es sich um einen in dem Objekt verzweigten Kanal handelt oder nicht, wenigstens zwei Kanaleingänge oder Kanalöffnungen an einer Oberfläche des Objekts auf. Eine Ausnehmung kann eine an einer Oberfläche des Objekts ausgebildete Vertiefung jeglicher Art sein. Wie eingangs ausgeführt, stellt es ein Problem dar, loses Pulver aus diesen Kavitäten oder Kanälen zu entfernen.

Gemäß einem ersten Aspekt der Erfindung wird eine Reinigungs-Baueinheit vorgeschlagen, die eingerichtet und ausgebildet ist zum Druckgasreinigen von Kavitäten oder Kanälen von in einem additiven Verfahren aus pulverförmigem Aufbaumaterial hergestellten Objekten von unverfestigt gebliebenem Aufbaumaterial durch eine Druckgasströmung, wenigstens umfassend:
a) einen Druckgastank, eingerichtet und ausgebildet zum Speichern von unter Druck gesetztem Druckgas, und
b) einen Druckgasversorgungsanschluss, eingerichtet und ausgebildet um an eine Druckgasquelle angeschlossen zu werden, um den Druckgastank mit Druckgas aus der Druckgasquelle zu versorgen,
c) einen Druckgasauslass, eingerichtet und ausgebildet, um das Druckgas aus dem Druckgastank als Druckgasströmung
   c1) direkt in die Kavität oder den Kanal des Objekts zu leiten oder einzubringen, oder
   c2) in einen Anschluss des Objekts oder an dem Objekt einzuleiten, welcher mit der Kavität oder dem Kanal des Objekts strömungsleitend verbunden ist,
d) wenigstens ein zwischen dem Druckgastank und dem Druckgasauslass angeordnetes Ventil, eingerichtet und ausgebildet, um die Druckgasströmung zu steuern, wobei das Ventil wenigstens eine, eine maximale Druckgasströmung gewährende Öffnungsstellung und eine einen Durchfluss an Druckgas verhindernde Schließstellung aufweist, und insbesondere mittels einer Steuerung zwischen der Öffnungsstellung und der Schließstellung steuerbar ist.

Als Druckgas kann insbesondere Druckluft oder ein jedes anderes Gas eingesetzt werden, beispielsweise auch ein Schutzgas, um Staubexplosionen zu vermeiden.

Unter der Reinigungs-Baueinheit soll eine Integration verschiedener Komponenten, hier insbesondere wenigstens des Druckgastanks, des wenigstens einen Ventils, des Druckgasversorgungsanschlusses und des Druckgasauslasses in einem einheitlichen d.h. als Baueinheit ausgeführten Modul verstanden werden, das per se handbarbar ist, ohne dass elektrische und/oder pneumatische Verbindungen zwischen diesen Komponenten erst hergestellt werden müssten. Solche elektrischen und/oder pneumatischen Verbindungen sollen bereits in der Reinigungs-Baueinheit ausgeführt sein. Die Komponenten der Baueinheit können innerhalb eines gemeinsamen Baueinheit-Gehäuses angeordnet sein, aber auch wenigstens teilweise in separaten Gehäusen, die dann beispielsweise miteinander verbunden und insbesondere aneinander geflanscht sind.

Der Vorteil einer solchen Reinigungs-Baueinheit besteht dann darin, dass sie als Ganzes leicht handhabbar ist und einsatzfertig direkt an die Kavitäten und Kanäle des Objekt händisch oder herangeführt werden kann, ohne dass hierfür in Bezug auf die Reinigungs-Baueinheit zusätzliche Komponenten wie Druckgasschläuche, Düsen, Gastanks notwendig sind oder erst noch angeschlossen werden müssen. Lediglich durch Positionieren der Reinigungs-Baueinheit an dem Objekt oder umgekehrt, beispielsweise durch eine insbesondere automatisch gesteuerte Handhabungsvorrichtung und durch eine Steuerung des wenigstens einen Ventils von der Schließstellung in die Öffnungsstellung ist dann ein Einströmen der Druckgasströmung in die Kavität oder den Kanal des Objekts zu Reinigungszwecken möglich. Ein weiterer Vorteil besteht darin, dass der Druck in dem Druckgastank an den Reinigungsprozess individuell angepasst werden und insbesondere höher ausfallen kann als beispielsweise derjenige, unter dem übliche Gasflaschen stehen. Nicht zuletzt ergibt sich dadurch eine verringerte Anzahl von elektrischen und/oder pneumatischen Schnittstellen wie sie ansonsten hergestellt werden müssten mit einer damit einhergehenden vorteilhaften Erhöhung der Betriebssicherheit. Die Reinigungs-Baueinheit kann dann auch als selbständig handelbares Produkt hergestellt und ohne Anpassung oder Veränderung bestimmungsgemäß eingesetzt werden.

Der Druckgastank ist beispielsweise eingerichtet und ausgebildet, um insbesondere komprimiertes Druckgas aufzunehmen und bei geschlossenem Ventil zu speichern.

Der Druckgasversorgungsanschluss oder eine Strömungsverbindung zwischen dem Druckgasversorgungsanschluss und dem Druckgastank kann ein Rückschlagventil aufweisen, welche zwar eine Druckgasströmung von dem Druckgasversorgungsanschluss in den Druckgasstank ermöglicht, aber eine Strömung in der Gegenrichtung verhindert. Auch kann der Druckgasversorgungsanschluss ausgebildet sein, um einen Druckschlauch oder ein Druckrohr lösbar anzuschließen, beispielsweise durch eine Schlauchkupplung, der dann insbesondere mit der Druckgasquelle, beispielsweise mit einem Kompressor verbunden wird, um den Druckgastank mit Druckgas zu befüllen oder zu laden. Auch kann der Druckgasversorgungsanschluss ausgebildet sein, um direkt an einen Kompressor angeschlossen zu werden. Die Druckgasquelle kann auch einen weiteren Druckgastank, beispielsweise eine Gasflasche umfassen. Wenn der Druckgastank von der Druckgasquelle mit Druckgas befüllt ist, dann kann die Reinigungs-Baueinheit bzw. der Druckgasversorgungsanschluss von der Druckgasquelle abgekoppelt werden.

Wie bereits oben ausgeführt kann die Reinigungs-Baueinheit wenigstens ein Gehäuse umfassen, in welchem wenigstens der Druckgastank und das Ventil integriert und an welchem der Druckgasauslass und der Druckgasversorgungsanschluss ausgebildet sind.

Das Ventil kann eingerichtet und ausgebildet sein, um mechanisch, insbesondere auch händisch, elektrisch, elektronisch, insbesondere durch ein Steuerungssignal einer elektronischen Steuerung und/oder hydraulisch gesteuert zu werden.

Auch kann das Ventil eingerichtet und ausgebildet sein, um insbesondere von einer elektronischen Steuerung zwischen der Öffnungsstellung und der Schließstellung gesteuert zu werden, insbesondere auch in eine Zwischenstellung zwischen der Öffnungsstellung und der Schließstellung. Damit ist eine feinfühlige Dosierung der aus dem Druckgasauslass ausströmenden Druckgasströmung möglich, welche in die Kavität oder in den Kanal des Objekts eingeführt wird.

Auch kann das Ventil ausgebildet und eingerichtet sein, um insbesondere von einer elektronischen Steuerung in einem Intermittierend-Modus betrieben zu werden, in welchem das Ventil zwischen der Öffnungsstellung und der Schließstellung zyklisch intermittierend gesteuert wird, um beispielsweise insbesondere zyklisch Druckgasstöße zu erzeugen, von denen sich herausgestellt hat, dass sie effektiv in Bezug auf das Reinigungsergebnis sind.

Alternativ oder zusätzlich kann das Ventil ausgebildet und eingerichtet sein, um insbesondere von einer elektronischen Steuerung in einem Impuls-Modus gesteuert zu werden, in welchem das Ventil schlagartig von der Schließstellung in die Öffnungsstellung öffnet, um eine impulsartige Druckgasströmung von dem Druckgastank in den Druckgasauslass zu erzeugen. Das Ventil kann beispielsweise ein Schnellöffnungsventil insbesondere mit einem relativ großen Öffnungsquerschnitt oder Strömungsquerschnitt sein, um auf ein mechanisches, elektrische oder hydraulisches Öffnungssignal hin einen impulsartigen Druckgasstoß in die Kavität oder in den Kanal des Objekts einzuführen. Auch kann das Ventil ausgebildet und eingerichtet sein, um ohne externe elektronische Steuerung lediglich durch eine beispielsweise manuelle Aktivierung den Impuls-Modus auszuführen.

Gemäß einer Weiterbildung kann die Reinigungs-Baueinheit einen insbesondere dem Druckgasversorgungsanschluss und dem Druckgastank zwischengeordneten Druckverstärker (Druckbooster) umfassen, welcher ausgebildet und eingerichtet sein, um den Druck der Druckgasquelle auf einen demgegenüber höheren Druck in dem Druckgastank zu erhöhen. Der Druckverstärker (Druckbooster) kann auch dem Druckgasversorgungsanschluss vorgeordnet sein und dann ebenfalls eine Komponente der Reinigungs-Baueinheit bilden.

Weiterhin kann der Druckgasauslass einen ersten Druckgasanschluss umfassen oder als erster Druckgasanschluss ausgebildet sein, welcher eingerichtet und ausgebildet ist um an einen hierzu komplementär ausgebildeten zweiten Druckgasanschluss am Objekt lösbar angekuppelt zu werden, beispielsweise mit Hilfe einer lösbaren Kupplung wie einem Bajonett-Verschluss.

Auch kann der Druckgasauslass in eine Druckgasdüse der Reinigungs-Baueinheit münden oder als Druckgasdüse ausgebildet ist, welche beispielsweise am Gehäuse außen angeordnet und eingerichtet ist, um in die Kavität oder in eine Mündung des Kanals des Objekts wenigstens teilweise einzutauchen zu können. Die geometrischen Dimensionen der Düse können an die Größe der Kavität oder des Kanals am Objekt angepasst werden, insbesondere durch ein Vorsehen von mehreren Düsen in einem Düsensatz, aus dem dann eine jeweils geeignete Düse ausgewählt werden kann.

Gemäß einem weiteren Aspekt betrifft die Erfindung auch ein Reinigungs-Set umfassend wenigstens die oben beschriebene Reinigungs-Baueinheit und den oben beschriebenen zweiten Druckgasanschluss als separate Komponente, eingerichtet und ausgebildet, um an oder in der Kavität oder an oder in einer Mündung des Kanals des Objekts angeschlossen oder gehalten zu werden.

Dieser zweite Druckgasanschluss kann als integraler Bestandteil des Objekts im Laufe der additiven Herstellung des Objekts hergestellt werden und wird daher quasi "mitgedruckt".

Auch kann eine Druckgasleitung, welche ausgebildet und eingerichtet ist, den Druckverstärker oder den Druckgasversorgungsanschluss mit der Druckgasquelle zu verbinden einen Bestandteil des Reinigungs-Sets bilden.

Gemäß einem weiteren Aspekt betrifft die Erfindung auch eine Reinigungsvorrichtung umfassend wenigstens eine oben beschriebene Reinigungs-Baueinheit und eine insbesondere durch eine insbesondere automatisiert gesteuerte Handhabungsvorrichtung, die ausgebildet und eingerichtet ist, um die Reinigungs-Baueinheit oder das Objekt aufzunehmen und um eine Relativposition zwischen der Reinigungs-Baueinheit und dem Objekt zu verändern, insbesondere um den Druckgasauslass der Reinigungs-Baueinheit einerseits und die Kavität oder eine Mündung des Kanals des Objekts andererseits insbesondere in eine mittelbare oder unmittelbare Strömungsverbindung zu bringen.

Mit Hilfe einer solchen Handhabungsvorrichtung, die insbesondere einen Roboter mit einem mobilen Arm umfasst, ist dann ein Verfahren möglich, bei dem
a) die von der Handhabungsvorrichtung geführte Reinigungs-Baueinheit gezielt an dem Objekt derart positioniert wird, oder
b) das von der Handhabungsvorrichtung geführte Objekt gezielt an der Reinigungs-Baueinheit derart positioniert wird, dass
der Druckauslass wenigstens teilweise in die Kavität oder in eine Mündung des Kanals des Objekts hineinragt, oder der erste Druckgasanschluss mit dem oben beschriebenen objektseitigen zweiten Druckgasanschluss gekoppelt werden kann.

Auch kann die Handhabungsvorrichtung eine Sensorik aufweisen, beispielsweise wenigstens eine insbesondere an dem mobilen Arm des Roboters angeordnete Kamera, deren Sensorsignale in einer Auswerteeinrichtung, insbesondere in einer elektronischen Steuerung ausgewertet werden, um die Positionen von Kavitäten oder Mündungen von Kanälen des Objekts zu detektieren und die Handhabungsvorrichtung dann abhängig von diesen detektierten Positionen derart zu steuern oder zu regeln, damit an diesen Positionen der Druckauslass wenigstens teilweise in die Kavität oder in eine Mündung des Kanals des Objekts hineinragt, oder der erste Druckgasanschluss mit dem oben beschriebenen objektseitigen zweiten Druckgasanschluss gekoppelt werden kann.

Alternativ können die Positionen der Kavitäten oder der Kanäle oder der Mündungen der Kanäle aus einem Datensatz des Objekts stammen, wie er beispielsweise für die additive Herstellung des Objekts verwendet worden ist oder auch aus einem CAD-Datensatz des Objekts.

Auch kann die elektronische Steuerung ausgebildet sein, um den Druckgasauslass der Reinigungs-Baueinheit sukzessive mit verschiedenen Kavitäten oder Kanälen des Objekts jeweils in eine insbesondere mittelbare oder unmittelbare Strömungsverbindung zu bringen.

Gemäß einem weiteren Aspekt betrifft die Erfindung auch ein Verfahren zur Druckgasreinigung von Kavitäten oder Kanälen von in einem additiven Verfahren aus pulverförmigem Aufbaumaterial hergestellten Objekten von unverfestigt gebliebenem Aufbaumaterial, bei welchem
a) zur Druckgasreinigung eine oben beschriebene Reinigungs-Baueinheit oder ein oben beschriebenes Reinigungs-Set oder eine oben beschriebene Reinigungsvorrichtung herangezogen wird, und dann das Verfahren wenigstens die folgenden weiteren Schritte umfasst:
b) Unter Halten des Ventils in der Schließstellung wenigstens teilweises Befüllen des Druckgastanks mit dem Druckgas aus der Druckgasquelle, und insbesondere danach, gleichzeitig oder davor
c) Herstellen einer Relativposition zwischen dem Druckgasauslass der Reinigungs-Baueinheit und der Kavität oder dem Kanal des Objekts durch Relativbewegung zwischen der Reinigungs-Baueinheit und dem Objekt, wobei die Relativposition eine insbesondere unmittelbare (z.B. mit Hilfe der Düse am Druckgasauslass) oder mittelbare (z.B. durch Koppeln des ersten Druckgasanschlusses mit dem zweiten Druckgasanschluss) Druckgasströmung von dem Druckgasauslass der Reinigungs-Baueinheit in die Kavität oder in den Kanal des Objekts ermöglicht, und dann
d) Stellen oder Schalten des Ventils in die Öffnungsstellung, um durch die aus dem Druckgasauslass austretende und in die Kavität oder den Kanal einströmende Druckgasströmung die Kavität oder den Kanal des Objekts zu reinigen.

Bei dem Verfahren kann das Ventil zwischen der Öffnungsstellung und der Schließstellung zyklisch intermittierend gesteuert werden. Auch kann bei dem Verfahren das Ventil schlagartig von der Schließstellung in die Öffnungsstellung geöffnet werden, um die Druckgasströmung impulsartig von dem Druckgastank in den Druckgasauslass zu leiten.

Auch kann das Objekt zumindest während eines Teils der Druckgasreinigung zu Schwingungen angeregt werden, insbesondere durch einen Ultraschall-Schwingungsanreger und/oder einen Klopfer, damit unverfestigt verbliebenes Aufbaumaterial zusätzlich dazu angeregt wird, aus den Kavitäten oder Kanälen des Objekts herauszufließen.

Bevorzugt kann bei dem Verfahren auch an dem Druckgasauslass der Reinigungs-Baueinheit ein erster Druckgasanschluss und an der Kavität oder an einer Mündung des Kanals des Objekts ein zweiter Druckgasanschluss angeordnet oder ausgebildet werden, wobei der zweite Druckgasanschluss in Bezug zu dem ersten Druckgasanschluss derart komplementär ausgebildet werden kann, dass der erste Druckgasanschluss mit dem zweiten Druckgasanschluss lösbar koppelbar ist, insbesondere mittels einer Kupplung.

Beispielsweise kann bei dem Verfahren der zweite Druckgasanschluss als integraler Bestandteil des Objekts im Laufe der additiven Herstellung des Objekts hergestellt werden.

Wenn der Kanal ein Durchgangskanal ist, d.h. sich durch wenigstens einen Teil des Objekts hindurcherstreckt, dann kann auch in einem solchen Durchgangskanal oder an einer Mündung eines solchen Durchgangskanals, die von der Mündung abweicht, an der oder in die die Druckgasströmung von der Reinigungs-Baueinheit eingeleitet wird, ein Strömungssensor angeordnet werden. Dieser Strömungssignal kann ausgebildet und eingerichtet sein, um die momentane Druckgasströmung (Volumen, Druck) durch den Durchgangskanal und/oder den momentanen Strömungswiderstand des Durchgangskanals zu repräsentieren. Das Durchflusssignal kann dann in einer Auswerteeinrichtung, beispielsweise in einer oder der elektronischen Steuerung dahingehend ausgewertet werden, wie sich die Druckgasströmung und/oder der Strömungswiderstand zeitlich ändert. Wird beispielsweise eine (signifikante) zeitliche Änderung festgestellt, dann kann der Reinigungsvorgang beispielsweise durch erneutes Einströmen von Druckgas in den Durchgangskanal mittels der Reinigungs-Baueinheit fortgesetzt werden. Wenn hingegen keine (signifikante) zeitliche Änderung mehr festgestellt, dann kann die Auswerteeinrichtung ein Signal erzeugen, das einen vollständig von unverfestigtem Aufbaumaterial gereinigten Durchgangskanal repräsentiert und der Reinigungsvorgang beendet werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: eine schematischen Teilquerschnitt einer bevorzugten Ausführungsform einer Reinigungs-Baueinheit gemäß der Erfindung, umfassend einen Druckgastank und ein Ventil, welche an einem additiv hergestellten Objekt positioniert ist, wobei die Reinigungs-Baueinheit und das Objekt in einer staubdichten Kammer aufgenommen sind und ein Druckauslass als erster Druckanschluss der Reinigungs-Baueinheit mit einem zweiten Druckanschluss gekoppelt ist, beispielsweise mittels einer lösbaren Kupplung, wobei der zweite Druckanschluss mit einer Mündung eines Kanals des Objekts integral ausgeführt ist;
- Fig. 2: die an dem Objekt positionierte Reinigungs-Baueinheit von Fig.1, wobei keine Kammer vorgesehen ist;
- Fig. 3: eine schematischen Teilquerschnitt einer weiteren Ausführungsform einer Reinigungs-Baueinheit gemäß der Erfindung, umfassend einen Druckgastank und ein Ventil, welche an einem additiv hergestellten Objekt positioniert ist, wobei die Reinigungs-Baueinheit und das Objekt in einer Reinigungskammer aufgenommen sind und ein hier als Düse ausgebildeter Druckauslass der Reinigungs-Baueinheit an einem bevorzugt integral mit dem Objekt ausgeführten Druckanschluss einer Mündung eines Kanals des Objekts positioniert ist;
- Fig. 4A: einen schematischen Teilquerschnitt der Reinigungs-Baueinheit von Fig. 1 oder von Fig. 2 in einer Situation während einer Positionierung des ersten Druckanschlusses der Reinigungs-Baueinheit in Bezug zu dem zweiten Druckanschluss, aber noch ohne Kopplung;
- Fig. 4B: einen schematischen Teilquerschnitt der Reinigungs-Baueinheit von Fig. 1 oder von Fig. 2 in einer Situation einer erfolgten Positionierung der Reinigungs-Baueinheit an dem Objekt und der erfolgten Kopplung des ersten Druckanschlusses mit dem zweiten Druckanschluss;
- Fig. 5: eine Seitenansicht des Objekts, an dem der zweite Druckanschluss im Laufe der additiven Herstellung integral ausgebildet worden ist;
- Fig. 6A: ein Diagramm, das den zeitlichen Verlauf des Drucks des Druckgases an dem Druckgasauslass der Reinigungs-Baueinheit wiedergibt, hier im Falle einer Steuerung des Ventils der Reinigungs-Baueinheit in einem Impuls-Modus;
- Fig. 6B: ein Diagramm, das den zeitlichen Verlauf des Drucks des Druckgases an dem Druckgasauslass der Reinigungs-Baueinheit wiedergibt, hier im Falle einer Steuerung des Ventils der Reinigungs-Baueinheit in einem Intermittierend-Modus;
- Fig. 7: einen Ablaufplan eines Reinigungsverfahrens gemäß einer bevorzugten Ausführungsform der Erfindung zur Druckgasreinigung von Kavitäten oder Kanälen von in einem additiven Verfahren aus pulverförmigem Aufbaumaterial hergestellten Objekten von unverfestigt gebliebenem Aufbaumaterial.

### Beschreibung des Ausführungsbeispiels

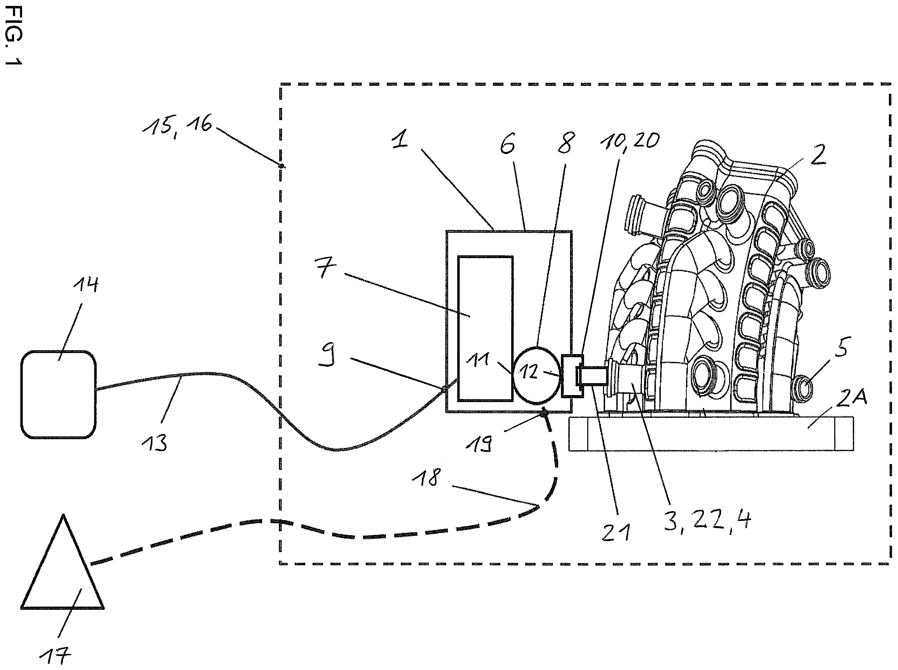

Fig. 1 zeigt einen schematischen Teilquerschnitt einer bevorzugten Ausführungsform einer Reinigungs-Baueinheit 1 gemäß der Erfindung, welche vorgesehen ist, um Kavitäten und/oder Kanäle aus einem pulverförmigen Aufbaumaterial auf einer Bauplattform 2A additiv gefertigten Objekts 2 von unverfestigt gebliebenem Aufbaumaterial durch eine Druckgasströmung zu reinigen.

Das dreidimensionale Objekt 2, wie hier beispielsweise ein Bauteil ist in einem Schichtbauverfahren mit Hilfe von Computerdaten zusammen mit der Bauplattform 2A in einer Baukammer hergestellt worden, indem wiederholt dünne Schichten aus losem pulverförmigen Aufbaumaterial auf die Bauplattform 2A aufgetragen worden sind und jede einzelne Schicht selektiv zu einem Bauteil- oder Modellquerschnitt verfestigt wurde. Die Verfestigung erfolgte beispielsweise chemisch, indem mit Drucktechnologie Tröpfchen aus Kleber selektiv auf festgelegte Bereiche der Schichten aus losem pulverförmigen Aufbaumaterial aufgebracht werden. Im hier vorliegenden Fall wurde das selektive Verfestigen des pulverförmigen Aufbaumaterials mittels energiereicher Strahlung, hier insbesondere mittels einer Lasersinterung (Laserstrahlung) vorgenommen.

An dem Objekt 2 haftet dann nach dem Bauprozess außen unverfestigt gebliebenes pulverförmiges Aufbaumaterial (loses Pulver) an. Da das Objekt 2 hier beispielsweise einen das Objekt 2 durchdringenden Kanal 3 mit hier beispielsweise zwei Mündungen 4, 5 an einer Außenfläche des Objekts 2 aufweist, haftet auch an den Innenwänden des Kanals 3 loses Pulver an, welches mit Hilfe der Reinigungs-Baueinheit 1 entfernt werden soll.

Die Reinigungs-Baueinheit 1 umfasst hier ein Gehäuse 6, in dem ein Druckgastank 7 und ein Ventil 8 integriert sind und an welchem ein mit dem Druckgastank 7 intern verbundener Druckgasversorgungsanschluss 9 sowie ein Druckgasauslass 10 ausgebildet sind. Dabei ist ein Ventil-Eingang 11 des Ventils 8 mit dem Druckgastank 7 und ein Ventil-Ausgang 12 des Ventils 8 intern mit dem Druckgasauslass 10 verbunden.

Der Druckgasversorgungsanschluss 9 ist hier beispielsweise mittels einer Druckgasleitung 13 an eine Druckgasquelle 14 angeschlossen, beispielsweise an einen Kompressor, um den Druckgastank 7 mit Druckgas aus der Druckgasquelle 14 zu beladen. Der Druckgasversorgungsanschluss 9 oder eine Strömungsverbindung zwischen dem Druckgasversorgungsanschluss 9vund dem Druckgastank 7 weist beispielsweise ein hier nicht explizit gezeigtes Rückschlagventil auf, welches zwar eine Druckgasströmung von dem Druckgasversorgungsanschluss 9 in den Druckgasstank 7 ermöglicht, aber eine Strömung in der Gegenrichtung verhindert. Die Druckgasleitung 13 ist beispielsweise jeweils mittels einer lösbaren Schlauchkupplung einerseits an die Druckgasquelle 14 und andererseits an den Druckgasversorgungsanschluss 9 der Reinigungs-Baueinheit 1 angeschlossen. Dabei kann die Druckgasleitung 13 eine Wand 15 einer hier beispielsweise vorhandenen Kammer 16, beispielsweise der Baukammer, in welcher das Objekt 2 additiv hergestellt worden ist, oder einer Reinigungskammer, welche dem Zweck der Reinigung oder des Entpackens des Objekts dient, durchdringen bzw. ist dort Druckgas durchleitend angeschlossen.

Fig. 1 zeigt die Situation, in welcher der Druckgastank 7 der Reinigungs-Baueinheit 1 mittels der Druckgasleitung 13 von der Druckgasquelle 14 hier beispielsweise mit Druckluft größer als der Atmosphärendruck, z.B. mit 6bar geladen oder befüllt wird. Nach dem Befüllen des Druckgastanks 7 wird dann bevorzugt die Druckgasleitung 13 von der Reinigungs-Baueinheit 1 abgekoppelt.

Das Ventil 8 ist zwischen einem Auslass des Druckgastanks 7 und dem Druckgasauslass 10 der Reinigungs-Baueinheit 1 angeordnet und ist hier beispielsweise ein von einer elektrischen oder elektronischen Steuerung 17 steuerbares Ventil, beispielsweise ein 2/2-Wege-Magnetventil. Das Ventil 8 ist hier mittels einer Steuerleitung 18 an die Steuerung 17 angeschlossen, welche hier beispielsweise außerhalb der Reinigungs-Baueinheit 1 und auch außerhalb der Kammer 16 angeordnet ist, weshalb am Gehäuse 6 auch ein SteuerleitungsAnschluss 19 für die Steuerleitung 18 vorgesehen ist. Alternativ könnte die Steuerung 17 auch in das Gehäuse 6 der Reinigungs-Baueinheit 1 integriert oder an oder in der Kammer 16 angeordnet sein.

An dem Gehäuse 6 der Reinigungs-Baueinheit oder an der Steuerung 17 oder an der Wand 15 angeordnet und mit der Steuerung 17 wirkverbunden sein kann eine hier nicht gezeigte Mensch-Maschine-Schnittstelle, welche ausgebildet und eingerichtet ist, um Steuerungsbefehle in die Steuerung 17 wie beispielsweise einen Aktivierungsbefehl zur Ausführung eines Reinigungsprozesses für die Kavität oder den Kanal einzugeben. Zusätzlich kann die Mensch-Maschine-Schnittstelle auch ein Display umfassen, auf welchem Informationen über den Reinigungsprozess, insbesondere über den Fortschritt des Reinigungsprozesses dargestellt werden können.

Das Ventil 8 weist daher bevorzugt als 2/2-Wege-Magnetventil ausgeführt zwei Schaltstellungen auf, nämlich eine, eine maximale Druckgasströmung gewährende Öffnungsstellung und eine einen Durchfluss an Druckgas verhindernde Schließstellung. Die Steuerung 17 kann mit Intelligenz oder ohne Intelligenz ausgeführt sein. Im ersten Fall sind bestimmte Steuermodi möglich wie beispielsweise ein später noch erläuterter Intermittierend-Modus oder auch ein Zwischenstellungs-Modus, in welchem das Ventil, insbesondere als Proportionalventil ausgeführt, neben der Öffnungs- und der Schließstellung auch eine Zwischenstellung dazwischen (dauerhaft) einnehmen kann. Im zweiten Fall kann die Steuerung 17 ausgebildet sein, um das Ventil 8 beispielsweise lediglich be- oder entstromen zu können, um dieses von der Schließstellung in die Öffnungsstellung zu steuern und umgekehrt. Ist das Ventil 8 in seine Sperrstellung geschaltet, so wird verhindert, dass das Druckgas in dem Druckgastank 7 als Druckgasströmung aus dem Druckgasauslass 10 strömen kann. In der Öffnungsstellung des Ventils wird dies aber ermöglicht. Das Druckgas ist hier bevorzugt Druckluft, kann aber auch ein Schutzgas umfassen oder durch ein solches gebildet sein, welches dann verhindert, dass es zu einer Staubexplosion kommt.

Bei der Ausführungsform von **Fig. 1** ist der mit dem Ventil-Ausgang 12 verbundene Druckgasauslass 10 der Reinigungs-Baueinheit 1 beispielsweise als erster Druckanschluss 20 ausgebildet, welcher mittels einer lösbaren Kupplung 21 wie einer abgedichteten Steckverbindung oder einem abgedichteten Bajonettverschluss an einen zweiten Druckanschluss 22 des Objekts 2 oder am Objekt 2 angeschlossen ist.

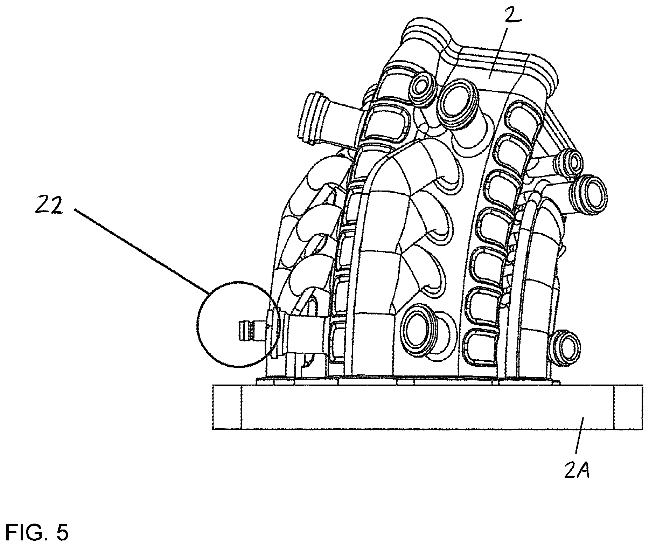

Der zweite Druckanschluss 22 ist hier beispielsweise im Laufe des additiven Herstellprozesses des Objekts 2 mit diesem integral hergestellt worden und hier beispielsweise mit einer Mündung 4 des Kanals 3 des Objekts 2 strömungsverbunden, der von unverfestigt gebliebenem Aufbaumaterial mittels der von der Reinigungs-Baueinheit 1 nach Öffnen des Ventils 8 erzeugten Druckgasströmung gereinigt werden soll, wie in **Fig. 5** gezeigt ist.

Alternativ kann der zweite Druckanschluss 23 auch als ein separates Bauteil ausgeführt sein, das ausgebildet und eingerichtet ist, um hier beispielsweise in eine Mündung 4 eines Kanals 3 des Objekts 2 eingesetzt und dort gehalten oder an dieser insbesondere lösbar befestigt zu werden, beispielsweise mittels Reibschluss. Dann kann der zweite Druckanschluss 22 als separate Komponente für mehrere Kanäle des Objekts 2 verwendet werden.

Daher kann auch ein Reinigungs-Set umfassend die oben beschriebene Reinigungs-Baueinheit 1 und den zweiten Druckgasanschluss 22 als separate Komponente zur Verfügung gestellt werden, das dann eine selbständig handelbare Ware zur Reinigung von Kavitäten und/oder Kanälen von additiv hergestellten Objekten 2 darstellt und als eine solche angeboten wird.

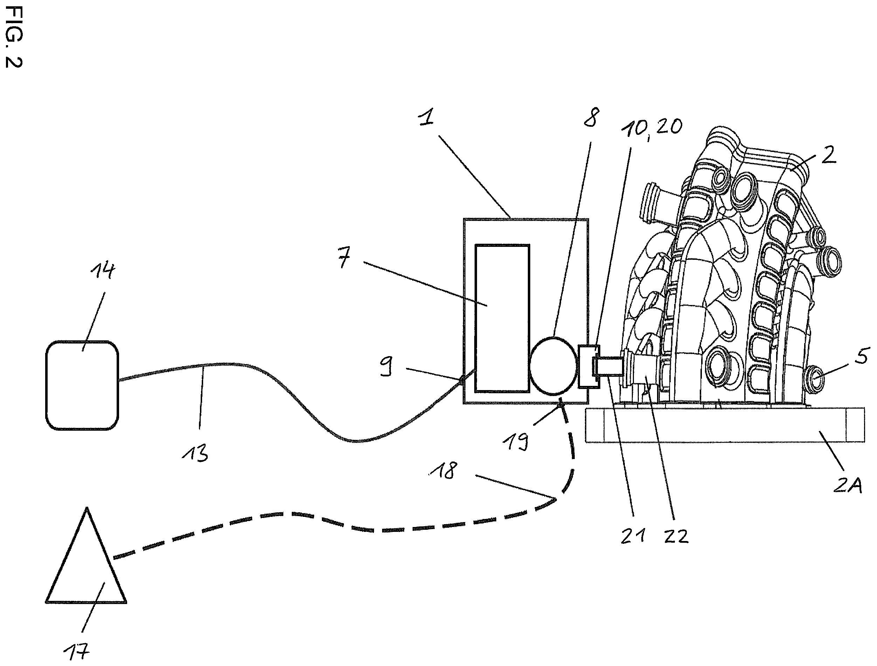

**Fig. 2** unterscheidet sich von **Fig. 1** lediglich darin, dass die Reinigung des Objekts 2 nicht innerhalb einer Kammer 16 stattfindet, sondern kammerlos.

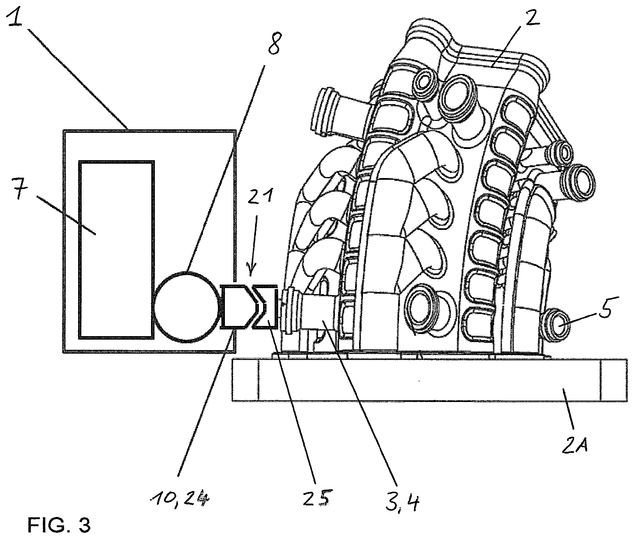

Die Ausführungsform von **Fig. 3** unterscheidet sich von den Ausführungsformen der Figuren 1 und 2 darin, dass anstelle von zwei mit Hilfe einer Kupplung 21 koppelbaren Druckanschlüssen 20, 22 eine Ausführung realisiert worden ist, bei welcher der Druckgasauslass 10 als Düse 24 ausgebildet ist, die dann im Laufe der Positionierung der Reinigungs-Baueinheit 1 an dem Objekt 2 bzw. an der Mündung 4 des zu reinigenden Kanals 3 des Objekts 2 entweder direkt in die Mündung 4 des Kanals 23 eingetaucht wird, oder aber, wie gezeigt, an einen objektseitigen und in Bezug auf die Düse 24 komplementär ausgeführten Druckanschluss 25 angesetzt wird. Dieser Druckanschluss 25 ist dann wiederum mit der Mündung 4 des Kanals 3 strömungsverbunden und kann beispielsweise ebenfalls eine separate Komponente in einem oben beschriebenen Reinigung-Set darstellen oder aber mit dem Objekt 2 bereits integral gefertigt worden sein, wie ebenfalls bereits oben ausgeführt worden ist.

Die Reinigungs-Baueinheit 1 ist daher als Ganzes handhabbar und bestimmungsgemäß zur Reinigung von Kavitäten oder Kanälen des Objekts 2 mittels einer Druckgasströmung einsetzbar, insbesondere zusammen mit der Steuerung 17. Die Druckgasleitung 13 und die Druckgasquelle 14 sind demgegenüber lediglich zum Versorgen und Beladen des Druckgastanks 7 mit Druckgas vorgesehen. Wenn der Druckgastank 7 ausreichend mit Druckgas befüllt ist, kann die Druckgasleitung 13 von der Reinigungs-Baueinheit abgekoppelt werden.

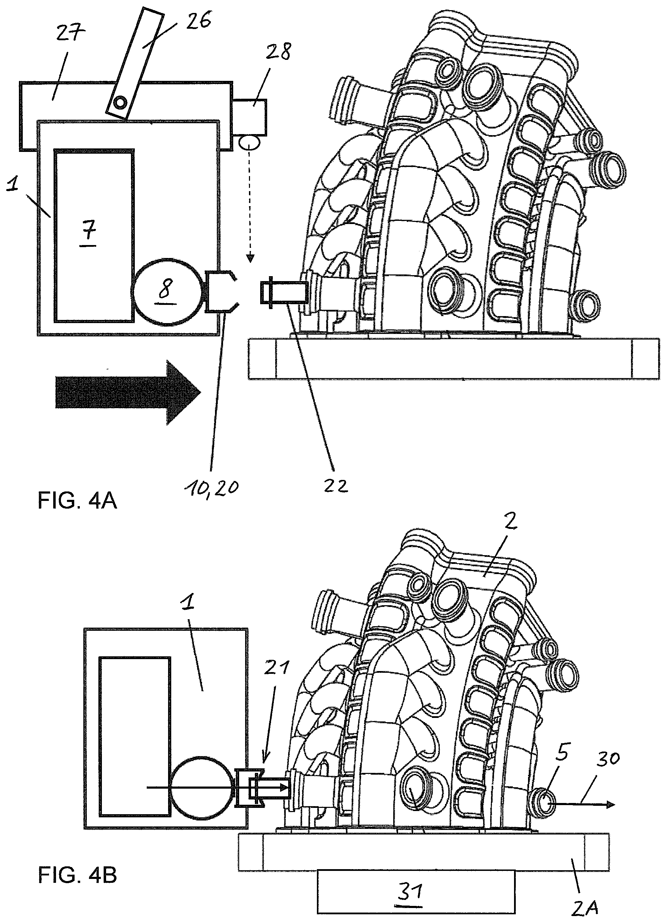

Wenigstens die Reinigungs-Baueinheit 1 kann von einer in **Fig. 4A** teilweise gezeigten Handhabungsvorrichtung geführt werden. Wenigstens die Handhabungsvorrichtung und die Reinigungs-Baueinheit 1 inklusive Steuerung 17 können dann von einer Reinigungsvorrichtung umfasst sein. Diese kann optional zusätzlich auch die Druckgasquelle 14 und die Druckgasleitung 13 umfassen.

Die Handhabungsvorrichtung ist beispielsweise ein Roboter mit einer Roboterbasis und einem daran gelenkig befestigten mobilen Arm 26, an dem Aufnahmemittel 27 ausgebildet sind, wie beispielsweise ein Greifer, durch welche die Reinigungs-Baueinheit 1 an dem mobilen Arm 26 aufnehmbar ist und von diesem insbesondere automatisiert geführt werden kann. Die Führung des Arms 26 kann beispielsweise von einer Auswertung von Kamerabildern einer beispielsweise mit dem mobilen Arm 26 mitgeführten Kamera 28 erfolgen. Die Kamera 28 ist dann in Zusammenwirken mit einer Auswerteeinrichtung für die Kamerabilder, die beispielsweise in einer Steuerung des Roboters implementiert sein kann, in der Lage, Kavitäten und/oder Mündungen 4, 5 von Kanälen 3 des Objekts 2 zu identifizieren. Nach einer solchen Identifikation kann dann der mobile Arm 26 des Roboters die Reinigungs-Baueinheit 1 gemäß der **Fig. 4A** an das additiv hergestellte Objekt 2 heranführen und dann gemäß **Fig. 4B** den ersten kuppelbaren Druckanschluss 20 der Reinigungs-Baueinheit 1 mit dem zweiten kuppelbaren Druckanschluss 22 am Objekt 2 koppeln, insbesondere alleine aufgrund der Positionierungsbewegung, weil die Kupplung 21 entsprechend ausgeführt ist.

Alternativ oder zusätzlich könnte die Reinigungs-Baueinheit 1 auch durch eine Bedienperson händisch an das Objekt 2 herangeführt werden, beispielsweise mittels eines in den Figuren 1 und 3 nicht dargestellten Handschuhdurchgriffs der Kammer 16.

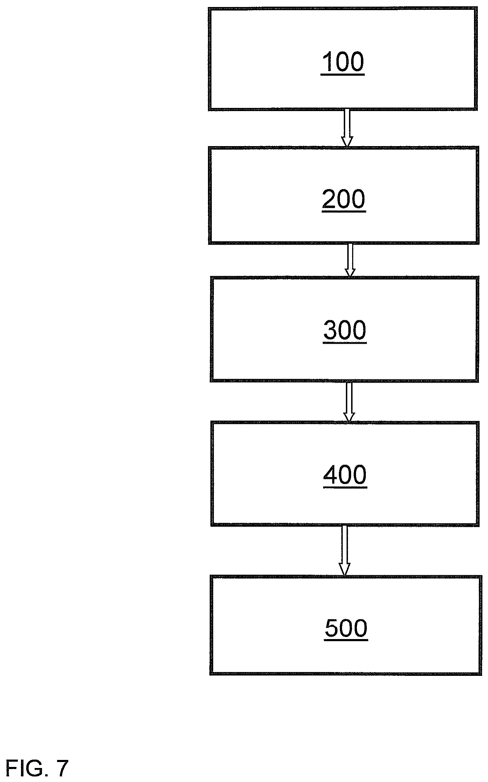

**Fig. 7** zeigt einen Ablaufplan einer bevorzugten Ausführungsform eines Reinigungsverfahrens zur Druckgasreinigung von Kavitäten oder Kanälen von in einem additiven Verfahren aus pulverförmigem Aufbaumaterial hergestellten Objekten von unverfestigt gebliebenem Aufbaumaterial.

In einem Schritt 100 wird für die Druckgasreinigung des Objekts 2 eine oben beschriebene Reinigungs-Baueinheit 1 herangezogen.

Dann oder zuvor wird in einem Schritt 200 der Druckgastank 7 der Reinigungs-Baueinheit 1 mit Druckgas befüllt, beispielsweise mit einem Druck von 6bar. Dabei ist klar, dass das Ventil 8 in der Schließstellung gehalten wird.

In einem insbesondere dem Schritt 200 zeitlich nachfolgenden Schritt 300 wird dann die Reinigungs-Baueinheit 1 wie in **Fig. 4A** gezeigt, derart an das Objekt 2 herangeführt, hier insbesondere automatisch mit Hilfe der Handhabungseinrichtung, beispielsweise mit dem mobilen Arm 26 des Roboters, dass der erste Druckanschluss 20 der Reinigungs-Baueinheit 1 mit dem zweiten Druckanschluss 22 am Objekt fluchtet, was beispielsweise mit Hilfe der Kamera 28 festgestellt werden kann. Dann wird gemäß **Fig. 4B** die Kopplung zwischen dem ersten Druckanschluss 20 und dem zweiten Druckanschluss 22 insbesondere alleine durch eine hier beispielsweise translatorische Bewegung der Reinigungs-Baueinheit 1 in Bezug auf das Objekt 2 bewerkstelligt. In diesem gekoppelten Zustand und in der dann erreichten Reinigungsposition der Reinigungs-Baueinheit 1 in Bezug zu dem Objekt 2 wird dann bei einem Schalten des Ventils 8 von der Schließstellung in die Öffnungsstellung eine unmittelbare Druckgasströmung aus dem Druckgasauslass 10 der Reinigungs-Baueinheit 1 in die Mündung 4 des Kanals 3 des Objekts 2 ermöglicht.

Folglich wird dann in dem Schritt 400 nach erfolgter Koppelung der beiden Druckgasanschlüsse 21, 22 wie in **Fig. 4B** oder nach erfolgter Einführung der Düse 24 in den Druckanschluss 25 wie in **Fig. 3** das Ventil 8 von der Steuerung 17 von der Schließstellung in die Öffnungsstellung geschaltet, um durch die aus dem Druckgasauslass 10 austretende und in den Kanal 3 einströmende Druckgasströmung den Kanal 3 des Objekts 2 zu reinigen. Auch während des Reinigungsprozesses kann die Reinigungs-Baueinheit von der Handhabungsvorrichtung in der Reinigungsposition von **Fig. 4B** gehalten werden.

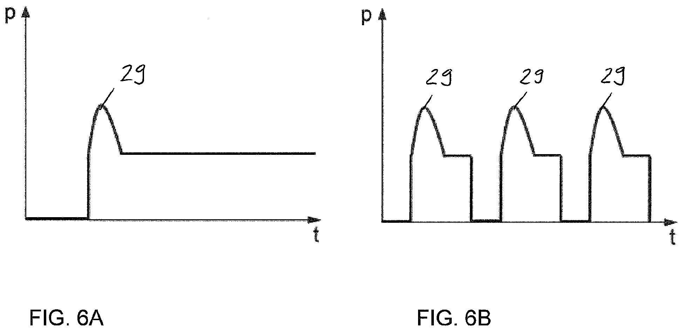

Dabei sind verschiedene Reinigungsmodi möglich. In einem durch das Diagramm von **Fig. 6B** veranschaulichten Impuls-Modus kann das Ventil 8 von der Steuerung 17 beispielsweise schlagartig oder in sehr kurzer Zeit von der Schließstellung in die Öffnungsstellung oder auch in eine Zwischenstellung geschaltet werden, was einen impulsartigen Druckgasstoß 29 hervorruft, der ein Ablösen von Pulverpartikeln von den Innenwänden des Kanals 3 und ein Mitreißen von Pulverpartikeln in der Druckgasströmung begünstigt. Dabei kann bereits ein einziger Druckgasstoß 29 ausreichend sein. Alternativ oder zusätzlich kann die Steuerung 17 das Ventil 8 in einem Intermittierend-Modus zyklisch von der Schließstellung in die Öffnungsstellung und von der Öffnungsstellung wieder in die Schließstellung schalten, wie in **Fig. 6B** gezeigt ist, so dass dadurch zeitlich sukzessive mehrere solche Druckgasstöße 29 entstehen.

Die Druckgasströmung oder die Druckgasstöße 29 bewirkt dann, dass überschüssiges und unverfestigtes Pulver aus der weiteren Mündung 5 des Kanals 3 austritt, mit welcher die Reinigungs-Baueinheit 1 nicht strömungsverbunden ist, wie durch den Pfeil 30 in **Fig. 4B** angedeutet wird.

Das Ablösen von Pulver von den Innenwänden des Kanals 3 kann optional in einem Schritt 500 durch eine Schwingungsanregung des Objekts 2 hervorgerufen unterstützt werden, indem ein Schwingungserreger 31 an dem Objekt 2 körperschallleitend angeordnet wird, insbesondere an der Bauplattform 2A des Objekts 2. Die Schwingungsanregung kann im Ultraschallbereich oder auch impulsartig durch einen Klopfer erfolgen.

### BEZUGSZAHLENLISTE

- 1: Reinigungs-Baueinheit
- 2: Objekt
- 2A: Bauplattform
- 3: Kanal
- 4: Mündung
- 5: Mündung
- 6: Gehäuse
- 7: Druckgastank
- 8: Ventil
- 9: Druckgasversorgungsanschluss
- 10: Druckgasauslass
- 11: Ventil-Eingang
- 12: Ventil-Ausgang
- 13: Druckgasleitung
- 14: Druckgasquelle
- 15: Wand
- 16: Kammer
- 17: Steuerung
- 18: Steuerleitung
- 19: Steuerleitungsanschluss
- 20: erster Druckanschluss
- 21: Kupplung
- 22: zweiter Druckanschluss
- 24: Düse
- 25: Druckanschluss
- 26: mobiler Arm
- 27: Aufnahmemittel
- 28: Kamera
- 29: Druckgasstoß
- 30: Pfeil
- 31: Schwingungserreger

## Patentansprüche

1. Reinigungs-Baueinheit (1), eingerichtet und ausgebildet zum Druckgasreinigen von Kavitäten oder Kanälen (3) von in einem additiven Verfahren aus pulverförmigem Aufbaumaterial hergestellten Objekten (2) von unverfestigt gebliebenem Aufbaumaterial durch eine Druckgasströmung, wenigstens umfassend:
a) einen Druckgastank (7), eingerichtet und ausgebildet zum Speichern von unter Druck gesetztem Druckgas, und
b) einen Druckgasversorgungsanschluss (9), eingerichtet und ausgebildet um insbesondere lösbar an eine Druckgasquelle (14) angeschlossen zu werden, um den Druckgastank mit Druckgas aus der Druckgasquelle (14) zu versorgen,
c) einen Druckgasauslass (10), eingerichtet und ausgebildet, um das Druckgas aus dem Druckgastank (7) als Druckgasströmung
c1) direkt in die Kavität oder den Kanal (3) des Objekts (2) zu leiten oder einzubringen, oder
c2) in einen Anschluss (22) des Objekts (2) einzuleiten, welcher mit der Kavität oder dem Kanal (3) des Objekts (2) strömungsleitend verbunden ist,
d) wenigstens ein zwischen dem Druckgastank (7) und dem Druckgasauslass (10) angeordnetes Ventil (8), eingerichtet und ausgebildet, um die Druckgasströmung zu steuern, wobei das Ventil (8) wenigstens eine, eine maximale Druckgasströmung gewährende Öffnungsstellung und eine, einen Durchfluss an Druckgas verhindernde Schließstellung aufweist.

2. Reinigungs-Baueinheit nach Anspruch 1, **dadurch gekennzeichnet, dass** sie wenigstens ein Gehäuse (6) umfasst, in welchem wenigstens der Druckgastank (7) und das Ventil (8) integriert und an welchem der Druckgasauslass (10) und der Druckgasversorgungsanschluss (9) ausgebildet sind.

3. Reinigungs-Baueinheit nach Anspruch 1 oder 2, **dadurch gekennzeichnet, dass** das Ventil (8) eingerichtet und ausgebildet ist, um mechanisch, elektrisch und/oder elektronisch und/oder hydraulisch gesteuert zu werden.

4. Reinigungs-Baueinheit nach einem der vorhergehenden Ansprüche, **dadurch gekennzeichnet, dass** das Ventil (8) eingerichtet und ausgebildet ist, um insbesondere von einer elektronischen Steuerung (17) zwischen der Öffnungsstellung und der Schließstellung gesteuert zu werden, insbesondere auch in eine Zwischenstellung zwischen der Öffnungsstellung und der Schließstellung.

5. Reinigungs-Baueinheit nach einem der vorhergehenden Ansprüche, **dadurch gekennzeichnet, dass** das Ventil (8) ausgebildet und eingerichtet ist, um insbesondere von einer elektronischen Steuerung (17) in einem Intermittierend-Modus betrieben zu werden, in welchem das Ventil (8) zwischen der Öffnungsstellung und der Schließstellung zyklisch gesteuert wird.

6. Reinigungs-Baueinheit nach einem der vorhergehenden Ansprüche, **dadurch gekennzeichnet, dass** das Ventil (8) ausgebildet und eingerichtet ist, um insbesondere von einer elektronischen Steuerung (17) in einem Impuls-Modus gesteuert zu werden, in welchem das Ventil (8) schlagartig von der Schließstellung in die Öffnungsstellung öffnet, um eine impulsartige Druckgasströmung von dem Druckgastank (7) in den Druckgasauslass (10) zu erzeugen.

7. Reinigungs-Baueinheit nach einem der vorhergehenden Ansprüche, **dadurch gekennzeichnet, dass** sie einen insbesondere dem Druckgasversorgungsanschluss (9) und dem Druckgastank (7) zwischengeordneten Druckverstärker umfasst, welcher ausgebildet und eingerichtet ist, um den Druck aus der Druckgasquelle (14) auf einen demgegenüber höheren Druck in dem Druckgastank (7) zu erhöhen.

8. Reinigungs-Baueinheit nach einem der vorhergehenden Ansprüche, **dadurch gekennzeichnet, dass** der Druckgasauslass (10) in eine Düse (24) mündet oder als Düse (24) ausgebildet ist, welche eingerichtet ist, um in die Kavität oder in eine Mündung (4) des Kanals (3) des Objekts (2) wenigstens teilweise einzutauchen zu können.

9. Reinigungs-Baueinheit nach einem der Ansprüche 1 bis 7, **dadurch gekennzeichnet, dass** der Druckgasauslass (10) einen ersten Druckgasanschluss (20) umfasst oder als erster Druckgasanschluss (20) ausgebildet ist, welcher eingerichtet und ausgebildet ist um an einen hierzu komplementär ausgebildeten zweiten Druckgasanschluss (22) am Objekt (2) lösbar angekuppelt zu werden.

10. Reinigungs-Set umfassend wenigstens die Reinigungs-Baueinheit (1) nach Anspruch 9 und den zweiten Druckgasanschluss (22) als separate Komponente, eingerichtet und ausgebildet, um an oder in der Kavität oder an oder in einer Mündung (4) des Kanals (3) des Objekts (2) angeschlossen oder gehalten zu werden.

11. Reinigungsvorrichtung umfassend wenigstens eine Reinigungs-Baueinheit (1) nach einem der Ansprüche 1 bis 9 und eine insbesondere durch eine insbesondere automatisiert gesteuerte Handhabungsvorrichtung, die ausgebildet und eingerichtet ist, um die Reinigungs-Baueinheit (1) oder das Objekt (2) aufzunehmen und um eine Relativposition zwischen der Reinigungs-Baueinheit (1) und dem Objekt (2) zu verändern, insbesondere um den Druckgasauslass (10) der Reinigungs-Baueinheit (1) einerseits und die Kavität oder eine Mündung (4) des Kanals (3) des Objekts (2) andererseits insbesondere in eine mittelbare oder unmittelbare Strömungsverbindung zu bringen.

12. Reinigungsvorrichtung nach Ansprüche 11, **dadurch gekennzeichnet, dass** sie eine Steuerung umfasst, welche ausgebildet ist, um den Druckgasauslass (10) der Reinigungs-Baueinheit (1) sukzessive mit verschiedenen Kavitäten oder Kanälen des Objekts (2) jeweils in eine insbesondere mittelbare oder unmittelbare Strömungsverbindung zu bringen.

13. Reinigungsverfahren zur Druckgasreinigung von Kavitäten oder Kanälen von in einem additiven Verfahren aus pulverförmigem Aufbaumaterial hergestellten Objekten von unverfestigt gebliebenem Aufbaumaterial **dadurch gekennzeichnet, dass**
a) zur Druckgasreinigung eine Reinigungs-Baueinheit (1) nach einem der Ansprüche 1 bis 9 oder ein Reinigungs-Set nach Anspruch 10 oder eine Reinigungsvorrichtung nach Anspruch 11 oder 12 herangezogen wird, und dann das Verfahren wenigstens die folgenden weiteren Schritte umfasst:
b) Unter Halten des Ventils (8) in der Schließstellung wenigstens teilweises Befüllen des Druckgastanks (7) mit dem Druckgas aus der Druckgasquelle (14),
c) Herstellen einer Relativposition zwischen dem Druckgasauslass (10) der Reinigungs-Baueinheit (1) und der Kavität oder dem Kanal (3) des Objekts (2) durch Relativbewegung zwischen der Reinigungs-Baueinheit (1) und dem Objekt (2), wobei die Relativposition eine insbesondere unmittelbare oder mittelbare Druckgasströmung von dem Druckgasauslass (10) der Reinigungs-Baueinheit (1) in die Kavität oder in den Kanal (3) des Objekts ermöglicht, und dann
d) Stellen oder Schalten des Ventils (8) in die Öffnungsstellung, um durch die aus dem Druckgasauslass (10) austretende und in die Kavität oder den Kanal (3) einströmende Druckgasströmung die Kavität oder den Kanal (3) des Objekts zu reinigen.

14. Reinigungsverfahren nach Anspruch 13, **dadurch gekennzeichnet, dass** das Ventil (8) zwischen der Öffnungsstellung und der Schließstellung zyklisch hin und her gesteuert wird.

15. Reinigungsverfahren nach Anspruch 13 oder 14, **dadurch gekennzeichnet, dass** das Ventil (8) schlagartig von der Schließstellung in die Öffnungsstellung geöffnet wird, um die Druckgasströmung impulsartig von dem Druckgastank (7) in den Druckgasauslass (10) zu leiten.

16. Reinigungsverfahren nach einem der Ansprüche 13 bis 15, **dadurch gekennzeichnet, dass** das Objekt (2) zumindest während eines Teils der Druckgasreinigung durch einen Schwingungserreger (31) zu Schwingungen angeregt wird, insbesondere durch einen Ultraschall-Schwingungsanreger und/oder einen Klopfer.

17. Reinigungsverfahren nach einem der Ansprüche 13 bis 16, **dadurch gekennzeichnet, dass** an dem Druckgasauslass (10) der Reinigungs-Baueinheit (1) ein erster Druckgasanschluss (20) und an der Kavität oder an einer Mündung (4) des Kanals (3) des Objekts (2) ein zweiter Druckgasanschluss (22) angeordnet oder ausgebildet wird, wobei der zweite Druckgasanschluss (22) in Bezug zu dem ersten Druckgasanschluss (20) derart komplementär ausgebildet ist, dass der erste Druckgasanschluss (20) mit dem zweiten Druckgasanschluss (22) lösbar koppelbar ist, insbesondere mittels einer Kupplung (21).

18. Reinigungsverfahren nach Anspruch 17, **dadurch gekennzeichnet, dass** der zweite Druckgasanschluss (22) als integraler Bestandteil des Objekts (2) im Laufe der additiven Herstellung des Objekts (2) hergestellt wird.
